# EUROPÄISCHE PATENTSCHRIFT

(11) **EP 0 432 513 B1**
(45) Veröffentlichungstag und Bekanntmachung des Hinweises auf die Patenterteilung: **24.08.1994**
(21) Anmeldenummer: 90122002.0
(22) Anmeldetag: 17.11.1990
(51) Int. Cl.: B03B 9/06

(54) **Verfahren zur Autoverschrottung**
Method of scrapping cars
Procédé pour mettre des véhicules à la ferraille

(30) Priorität: 12.12.1989 DE 3940959
(43) Veröffentlichungstag der Anmeldung: 19.06.1991
(73) Patentinhaber: THYSSEN INDUSTRIE AG, 45128 Essen (DE)
(72) Erfinder: Häusler, Dietrich, W-3502 Vellmar 1 (DE); Djawadi, Gholam Hassan, W-3500 Kassel (DE)

(56) Entgegenhaltungen:
- DE-A- 2 900 666
- DE-A- 3 640 501
- FR-A- 1 510 164
- US-A- 3 603 514
- ERZMETALL vol. 25, no. 6, Juni 1972, STUTTGART DE Seiten 290 - 295; MELIN: "Physikalische Aufbereitungsverfahren für sekundäre Rohstoffe"
- KUNSTSTOFFE. vol. 78, no. 7, Juli 1988, MUNCHEN DE Seiten 573 - 583; MENGES ETAL: "Recycling des Kunststoffanteils von Pkws: ja, aber wie?"
- THYSSEN TECHNISCHE BERICHTE. no. 2, 1986, DUISBURG DE Seiten 245 - 253;GÜNNEWIG ET AL: "Recycling von Altautos"

## Beschreibung

Die Erfindung betrifft ein Verfahren zur Autoverschrottung nach dem Oberbegriff des Patentanspruchs 1.
Die Beseitigung von Autokarossen erfolgt durch ein organisiertes Zuleiten des Schrottes auf Schrottplätze mit Zerkleinerungs- und Separiereinrichtungen.
Nach einer Zwischenlagerung auf dem Schrottplatz werden die Autokarossen im Anlieferungszustand, das heißt komplett, der Zerkleinerungs- und Separiereinrichtung zugeführt.
Hier wird das Material zerkleinert und so weit aufgeschlossen, daß in der nachgeschalteten Separieranlage der ungeordnete Mengenstrom des zerkleinerten Materials in verschiedene Metalle und in kunststoffbelastete Materialgemenge aufgeteilt werden kann.
Das Eisen und Nichteisenmetall wird einer Wiederverwertung zugeführt.
Aus dem kunststoffbelasteten Materialgemenge ließen sich bisher keine Wertstoffe separieren, die eine erneute Verwendung gestatten.
Daher wird dieses kunststoffbelastete Materialgemenge auf Deponien zur Endlagerung gebracht oder als "Sondermüll" verbrannt.
Die in den zu zorkleinernden Autokarossen enthaltenen Flüssigkeiten, insbesondere die Öle werden bei dem Zerkleinerungsprozeß im Shredder mit dem übrigen Material intensiv vermischt.

Dabei nimmt der Kunststoff dieses Öl auf und ist somit für eine andere Beseitigung als Deponie oder Verbrennung nicht geeignet.

Da die Kunststoffanteile der Autokarossen sehr hoch sind (ca. 10 %) und eine steigende Tendenz vorhanden ist, ist der Anteil der zu deponierenden oder zu verbrennenden Menge des Sondermülls sehr hoch.
Weiterhin wird es zunehmend schwieriger eine Entsorgung in Form von Deponie oder Verbrennung für dieses Material zu finden bzw. genehmigt zu bekommen.
Die Kosten für diese Entsorgung müssen vom Erlös der Recycling-Materialien Eisen und Nichteisen gedeckt werden, was jedoch in Zukunft nicht immer möglich sein wird.
Daher wird die Existenz der Shredderbetreiber, die sich ,ausschließlich mit der Verarbeitung von Autos befassen, gefährdet.
Zur Vermeidung des hohen Sondermüllaufkommens ist bekannt, eine Demontage von Autokarossen vor dem Shreddern vorzunehmen.

In Pilotversuchen wurde eine Demontage von Kunststoffteilen vor dem Shreddern durchgeführt.
Somit wurde der Müllanteil im geshredderten Material zu einem Teil gesenkt. (Siehe VDI-Nachrichten Nr. 19 vom 12.Mai 1989, Seite 29: "Nach 90 Minuten sind Autowracks kunststofffrei.")

Nachteilig hierbei ist, daß neben hohem Zeitaufwand die ausgebauten Kunststoffteile nicht ohne weiteres einer Ronstoffrückgewinnung zugeführt werden können aus folgenden Gründen:
- Die Kunststoffe sind nicht sortiert
- Die Kunststoffe müssen in einer gesonderten Zerkleinerungsanlage verarbeitet werden
- Es wird eine bessere Infrastruktur notwendig um obige Verfahren zu erfüllen, was den Rahmen der bestehenden Strukturen sprengt.

Desweiteren sind aus "Thyssen Technische Berichte" 2/86, S. 245 - 253, Verfahren zur Autoverschrottung bekannt, bei denen die zu verschrottenden Kraftfahrzeuge in Zerkleinerungsvorrichtungen wie Scheren und Shredder, zerkleinert werden und eine Separation des zerkleinerten Materials, vzw. mittels Electromagnettrommel, erfolgt.

Da die Kraftfahrzeuge einschl. Motor, Achsen, Getriebe, Polster und Reifen zur Verarbeitung gelangen, erfolgt in der Zerkleinerungsvorrichtung ein Übergang des Öles von ölhaltigen oder ölbehafteten Bestandteilen auf an sich ölfreie Materialien, womit letztere zu Sondermüll werden.

Der Erfindung liegt die Aufgabe zugrunde bei der Autoverschrottung die Menge des Sondermülls zu reduzieren.

Diese Aufgabe wird durch die kennzeichnenden Merkmale des Patentanspruchs 1 gelöst.

Die mit der Erfindung erzielten Vorteile bestehen darin, daß neben der Verringerung der Menge des Sondermülls auch Kunststoffe in wiederverwertbarer Form gewonnen werden.
Die dadurch resultierenden verschiedenen spezifischen Müllbeseitigungskosten lassen die Shredderanlage wirtschaftlich werden, verringern gleichzeitig den bisherigen Müllanteil entscheidend und ermöglichen die Wiederaufbereitung in einer im Nachgang zur Shredder- und Separieranlage geschalteten Kunststoffseparieranlage.

Die Einzelschritte zur Durchführung des Verfahrens sind in der Zeichnung mit Fließschemen beispielhaft dargestellt.

Es zeigt
- Fig. 1: Den Durchlauf von Schrott mit Öl, Flüssigkeiten und Kunststoffen
- Fig. 2: Den Durchlauf von Schrott ohne Öl und Flüssigkeiten mit recyclefähigen Kunststoffen
- Fig. 3: Den Durchlauf von Schrott ohne Öl mit nicht recyclefähigen Kunststoffen.

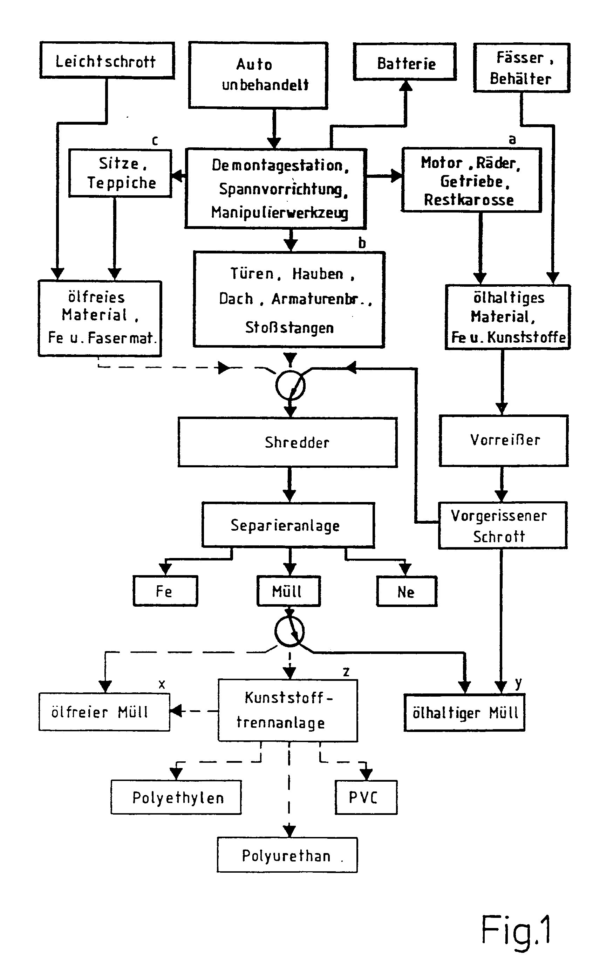

Bei der Verarbeitung von Schrott mit Öl, Flüssigkeiten und Kunst-stoffen nach Fig. 1 werden die Autokarossen in eine Demontagestation eingebracht, in der die Zerlegung durchgeführt wird.
Die hier entnommenen Materialien wie Motor, Räder, Getriebeund Restkarosse werden durch Förderbänder und Kraneinrichtungen in einen Vorreißer gegeben.

Hier wird das Material durch drei mit unterschiedlichen Drehzahlen laufende Reißwellen zerissen. Die flussigkeitsenthaltenden Räume werden geöffnet. Flüssigkeiten treten aus und werden über einen Ölabscheider entsorgt.
Die abgefilterten Reststoffe werden dem ölhaltigen Müll zugeführt.
Der vorgerissene Schrott wird durch Kraneinrichtungen auf Gas Zu-führband der Zerkleinerungseinrichtung gegeben.
Diese besteht aus einem Shredder.

In der Separieranlage wird das Material durch Windsichtung und Magnetabscheidung in die drei Fraktionen Fe, Müll und NE aufgeteilt.
Dieser Müll Ist Sondermüll und wird dem ölhaltigen Müll zugeführt.

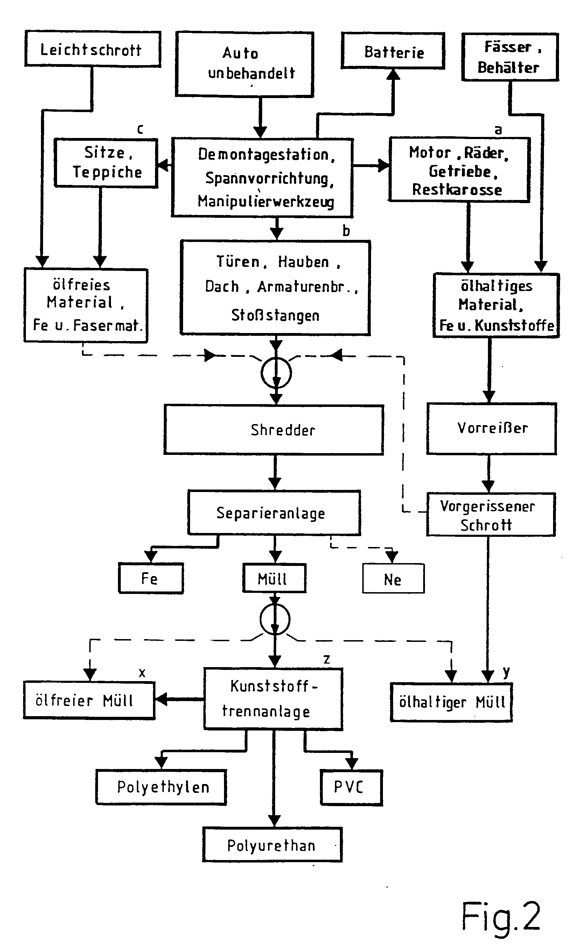

Bei der Verarbeitung von Schrott ohne Öl und Flüssigkeiten mit recyclefähigen Kunststoffen nach Fig. 2 werden die in der Demontagestation entfernten Türen, Hauben, Dächer, Armaturenbretter und Stoßstangen mittels Kraneinrichtungen auf das Zuführband der Zerkleinerungseinrichtung (Shredder) gegeben.

In der Separieranlage werden im wesentlichen Fe und Müll, d. h. Kunststoffgemenge getrennt.
Das Kunststoffgemenge wird in einer Kunststofftrennanlage zerlegt in ölfreien Müll, Polyäthylen, Polyurethan und PVC.

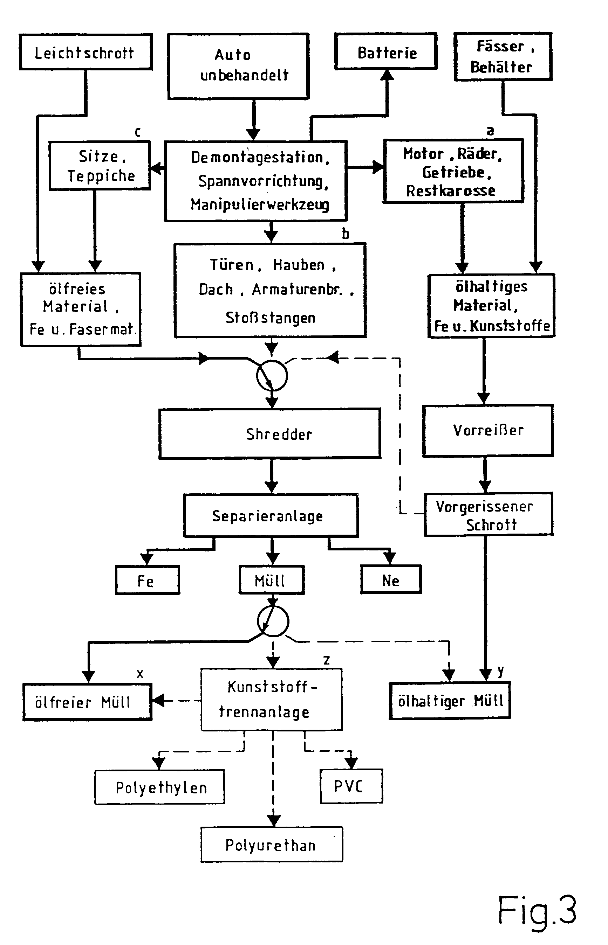

Bei der Verarbeitung von Schrott ohne Öl mit nicht recyclefähigen Kunststoffen nach Fig. 3 werden die in der Montagestation entfernten Sitze und Teppiche in die Zerkleinerungseinrichtung (Shredder) gegeben.
In der Separieranlage wird der Materialstrom getrennt in Fe, Müll und NE.
Der hier anfallende Müll ist ölfreier Müll.

Die maschinellen Einrichtungen für alle drei Verfahren bestehen aus einer Demontagestation, einem Vorreißer, einem Shredder, einer Separieranlage und einer Kunststofftrennanlage.

Für die Durchführung des Verfahrens werden nachstehend einige Einzelheiten erläutert.

Die Karossen werden in einer Demontagestation auf eine Grundplatte gespannt durch Krallen, die an den Rädern anfassen. Durch Manipulier- oder Balanceeinrichtungen werden die Türen und Hauben aufgeklappt und durch Spezialwerkzeuge abgetrennt und zusammengefaßt abgelagert.
Hierzu kommt ebenfalls das Dach der Karosse, das mit einer Spezialschere an den Holmen abgeschnitten wird.
Anschließend werden die Sitze, insbesondere die Polster, durch Greifeinrichtungen herausgenommen und ebenfalls gesondert abgelagert.

Der Vorreißer besteht aus einer Einlaufschurre und einem Gehäuse in dem drei Wellen mit unterschiedlicher Drenzahl im Langsamlauf das Material zerreißen.

Die Zerkleinerungseinrichtung besteht aus einem Shredder in bekann-ter Ausführung.
Das Material wird durch einen schnellaufenden Rotor mit Hämmern zerkleinert und aufgeschlossen, d. h. in seine Bestandteile zerlegt.

Die Separieranlage enthält einen Windsichter und nachgeschaltet eine Elektro-Magnettrommel.
Der aufzuarbeitende Müll fällt an im Windsichter-Zyklon sowie in der NE-Fraktion unter der Magnettrommel.

Die Kunststofftrennanlage besteht aus einer Lagerung in Silos, einer anschließenden Waschanlage mit der zugehörigen Waschwasserfiltereinrichtung, und der eigentlichen Kunststofftrennanlage mit den zugehörigen Trenn- und Trocknungsstufen.

## Patentansprüche

1. Verfahren zur Autoverschrottung, bei dem die zu verschrottenden Kraftfahrzeuge in einer Zerkleinerungsvorrichtung zerkleinert werden und eine Separation des zerkleinerten Materials erfolgt dadurch gekennzeichnet , daß die zu verschrottenden Kraftfahrzeuge vor der Zerkleinerung in Bestandteile zerlegt und nachfolgend Bestandteile in einer Fraktion ölbehafteten Schrottes und einer Fraktion ölfreien Schrottes erfaßt werden, und daß die eine Fraktion unabhängig von der anderen in der Zerkleinerungsvorrichtung zerkleinert und in der Separieranlage separiert wird.

2. Verfahren nach Anspruch 1, dadurch gekennzeichnet, daß die Fraktion des ölfreien Schrottes in Schrott mit recyclefähigen Kunststoffen und in Shrott mit nicht recyclefähigen Kunststoffen aufgeteilt wird und die im Ergebnis dieser Aufteilung entstandenen Fraktionen unabhängig voneinander zerkleinert und separiert werden.

3. Verfahren nach Anspruch 1 oder 2, dadurch gekennzeichnet, daß die verschiedenen Fraktionen in einer diskontinuierlichen Arbeitsweise zu verschiedenen Zeiten in der gleichen Zerkleinerungsvorrichtung zerkleinert und in der gleichen Separieranlage separiert werden.

## Claims

1. A process for scrapping motorcars wherein the motor vehicles to be scrapped are crushed in a crushing device and a separation of the crushed material occurs, characterized in that the motor vehicles to be scrapped are disassembled into components before crushing and components are then gathered in a fraction of oil-covered scrap and a fraction of oil-free scrap and that the one fraction is crushed in the crushing device and separated in the separating device independently of the other.

2. A process according to claim 1, characterized in that the fraction of the oil-free scrap is divided into scrap with plastics which can be recycled and into scrap with plastics which cannot be recycled and the fractions resulting from this division are crushed and separated independently of one another.

3. A process according to claim 1 or 2, characterized in that the different fractions are crushed in a discontinuous operation at different times in the same crusher and are separated in the same separating device.

## Revendications

1. Procédé pour casser des véhicules automobiles et les transformer en de la ferraille, selon lequel on fragmente, dans une installation de fragmentation, des véhicules automobiles à ferrailler et l'on effectue une séparation de la matière et des matériels fragmentés, procédé caractérisé en ce que, avant la fragmentation, les véhicules automobiles à ferrailler sont démontés en parties constitutives et les parties constitutives sont ensuite traitées en une fraction de ferraille contenant de l'huile et une fraction de ferraille sans huile, et en ce qu'une fraction est fragmentée, indépendamment de l'autre, dans des dispositifs de fragmentation et est séparée dans le dispositif de séparation.

2. Procédé selon la revendication 1, caractérisé en ce que la fraction des ferrailles sans huile est répartie en de la ferraille comportant des matières plastiques recyclables et en de la ferraille comportant de la matière plastique non recyclable et en ce que les fractions résultant de cette séparation sont, indépendamment l'une de l'autre, fragmentées et soumises à séparation.

3. Procédé selon la revendication 1 ou 2, caractérisé en ce que, dans une façon discontinue de travailler, les diverses fractions sont fragmentées à des moments différents dans la même installation de fragmentation et elles sont séparées dans la même installation de séparation.
